# EUROPEAN PATENT SPECIFICATION

(11) **EP 2 678 288 B1**
(45) Date of publication and mention of the grant of the patent: **20.01.2016**
(21) Application number: 12706906.0
(22) Date of filing: 27.02.2012
(51) Int. Cl.: C04B 14/22, C04B 26/28

(54) **IMPROVED BINDER BLENDS**
VERBESSERTE BINDEMITTELMISCHUNGEN
MÉLANGES DE LIANT AMÉLIORÉS

(30) Priority: 25.02.2011 GB 201103291; 10.11.2011 GB 201119427; 13.01.2012 WO PCT/GB2012/050074
(43) Date of publication of application: 01.01.2014
(73) Proprietor: Tuffbau Limited, Essex RM20 3LU (GB); Evans, Kerry, Rangiora 7400 (NZ)
(72) Inventor: EVANS, Kerry, Rangiora 7400 (NZ); BURTON, David, Grays Essex RM20 3LU (GB)
(74) Representative: Marchant, Michael John
(86) International application number: PCT/GB2012/050441
(87) International publication number: WO 2012/114129

(56) References cited:
- WO-A1-2006/029539
- WO-A2-01/77242
- AU-A1- 2005 243 604
- DE-A1- 19 539 309
- GB-A- 2 322 630
- US-A1- 2008 050 176

## Description

The present invention relates to blends comprising an organic binder and crushed glass, both for use as homogenous surfaces and as bedding or jointing materials for modular paving.

Homogenous surfaces comprise blends of randomly shaped aggregate of various sizes which are randomly disposed throughout the construction layer of the pavement being referred to. This might be a base course or a surface course.

Modular paving comprises relatively larger paving elements which form a surface or wearing course, commonly referred to as slabs or setts. These are laid upon a bedding layer of unbound or bound aggregate and the joints between the paving elements filled with an unbound or bound aggregate. The plan area made up of joints in such a pavement typically comprises less than 15% of the overall surface area.

In the modular paving industry, it is important to select the type of construction technique appropriate to the situation. Generally there are two categories of construction, bound or unbound. Bound construction means paving elements bedded and jointed using rigid mortar or plastic and/or ductile bound aggregates. The term "plastic" in this context refers to the mode of behaviour under stress. Unbound aggregate means paving elements bedded and jointed using only aggregate.

In the modern era, with vehicles becoming ever more prevalent and larger, the use of bound bedding and jointing systems is becoming ever more necessary.

In particular, the present invention relates to blends comprising a water absorbent organic binder in combination with an aggregate material.

Mortar and concrete based on cement and Pozzolanic binders, whether or not they contain polymeric admixtures, are flexible but rigid in nature. They can deform in response to applied forces but only within the constraints of an elastic limit. Deformation beyond the elastic limit results in permanent failure. Rigid mortar and concrete returns to its original form when an applied force is removed.

Concrete based upon a bituminous binder is not rigid but elastic and plastic and/or ductile in nature. This is commonly referred to as asphalt concrete. Deformation resulting from applied load is permanent. In an homogenous surface such as a conventional bitumen bound carriageway, the ongoing deformation in response to fatigue loading is considered acceptable until it reaches what is termed intervention level. Deformation within prescribed limits is not deemed to be failure.

Modular paving may be constructed using rigid but flexible mortars for both bedding and jointing. Just as with an homogenous rigid concrete pavement, failure occurs when the elastic limit is exceeded.

Modular paving may be constructed using unbound aggregates for both bedding and jointing. Within limits the unbound aggregate bedding and jointing media may deform in response to applied forces and subsequently reform in a slightly different position, from the action of gravity, vibration and water movement through the matrix of unbound aggregate particles. The inventors note that this traditional system of construction is highly desirable but has limits beyond which its use is practical in heavily trafficked and urban situations.

Systems of binding the aggregate particles which comprise bedding and jointing for modular paving such that the bound medium is thus flexible and plastic and/or ductile have previously been developed by others. These products typically employ polymeric resins and similar man-made chemicals. The present inventors have identified that these materials deform relatively easily in compression, due to thermal stress or applied forces, but are unable to return to their original form after a period of fatigue loading. This process leads to failure relatively early in the service life of a pavement.

GB2322630 discloses a settable mixture of materials such as for use in securing paving and flooring and comprising polybutadiene and ground glass and optionally including sand and a flow enhancing solvent.

WO0177242 discloses a water-resistant lightweight adhesive, particularly for use as a tile adhesive or grout, that is produced by the addition of an adhesion promoter plus hollow filler and/or micro-spheres to an aqueous organic binding agent comprising a particular acrylic ester as an aqueous dispersion.

DE19539309 discloses noise protection or insulation material consisting entirely of a secondary raw material and another material to be mixed with the first, having air noise and / or structure-borne noise insulation characteristics.

WO2006029539 discloses a mixture of material for providing at least a portion of a travelled surface. The mixture includes an aggregate with a plurality of particles. The mixture also includes a hydrocolloidal agent adapted to swell upon exposure to water to form a resilient and flexible binder, for substantially binding the particles of the aggregate together.

The growing use of polymeric resin binders in various bound aggregate blends is not ideal, since the manufacture of these polymers is often not without adverse environmental and cost implications. Thus, the present inventors advantageously use organic binders in the manufacture of the present inventive bound aggregate products. Moreover, the present inventors have noted that the commercial recycling of glass is an industry in its infancy, and whilst stockpiles are large, good uses to date are limited. The present inventors have surprisingly found that the inclusion of crushed glass into bound aggregate blends comprising an organic binder component results in a product that has advantageous properties over the current commonly used bound aggregate products, which employ only aggregates such as sand or grit.

In particular, the present inventors have found that recycled glass performs particularly well under test conditions, when combined with a plant-based binder.

Thus, in one embodiment of the present invention there is provided a binder blend comprising an organic binder component and a glass component, wherein the binder component is derived from the plant genus Plantago, preferably psyllium, and wherein said glass component comprises crushed glass particles, wherein less than 10% of the glass particles used are less than 50 µm.

Preferably each of the binder component and glass component is present as a particulate material, such as a powder.

The organic binder component comprises a plant-based binder. The binder component is preferably 'activated' when it comes into contact with a liquid, and is preferably water-activated. By "water-activated" it is meant that the binder component changes properties when it comes into contact with water such that, in the present case, a glue-like substance is formed from the binder component as it interacts with water. Such a substance is sometimes referred to as mucilage. Such an adhesive property is advantageous as it aids in binding the glass component and optional other ingredients together.

Such an activation of the binder component is mediated at least in part by the amount the binder component swells on activation with water. The binder component preferably has a swell volume of at least about 10 ml/g, preferably at least about 20 ml/g. Preferably, the binder component has a swell volume of less than about 100 ml/g. More preferably, the binder component has a swell volume in the range of between about 15 ml/g and about 80 ml/g. Yet more preferably, the binder component has a swell volume in the range of between about 20 ml/g and about 70, 60 or 50 ml/g, preferably in the range of between about 30 ml/g to about 50 ml/g. Yet more preferably, the binder component has a swell volume in the range of about 20 ml/g to about 30 ml/g, preferably about 25 ml/g to about 45 ml/g, preferably between about 27 ml/g and 42 ml/g. In some embodiments the swell volume is between about 30 ml/g and 40 ml/g. In some embodiments, the swell volume of the binder component is around 35 ml/g.

In embodiments of the present invention, the binder component is derived from the plant genus *Plantago.* Preferably, the binder component is derived from Plantago ovata, or psyllium, and preferably derived from its seeds or husk. More preferably, the plant binder is a psyllium-derived powder, such as psyllium husk powder or kha kha powder, which is a byproduct of psyllium husk production. Such psyllium powder is commercially available from a variety of suppliers (such as from JYOT OVERSEAS PVT LTD, Gujarat, India).

In addition, the binder component may be derived from other plant families, such as the cereals or pines, as long as the derived products are able to swell when in contact with water to produce an adhesive (e.g. mucilage). Such a plant product may be derived from e.g. oats, barley, rice, wheat, millet, maize, etc.

The binding property of psyllium and other similar organic binders is believed to be due to the content of special proteins and polysaccharides on the one hand and on the other hand an apparent high content of natural silicic acids. Proteins and polysaccharides are able to absorb water, subsequently to swell to a high degree and to form a kind of natural glue. Silicic acids can work as a chemical bridge (forming -0-Si-O - bonds) between the organic components of psyllium (proteins and polysaccharides) and the inorganic components of the aggregate (silica or quartz sand, crushed granite or similar stones), since the chemical structure of silicic acid is similar to that of the stone.

Psyllium is interesting for pavement jointing and pathway surfaces because it is reactivated whenever moisture is introduced, whereupon it can swell into adjacent spaces, close gaps and help to hold the matrix of aggregate particles in a cohesive mass using its adhesive qualities.

The organic binder component of the present invention may comprise impurities as well as the active ingredient of interest. Such impurities may comprise such things as light and/or heavy extraneous material (such as dust, agro farm fibres, wastes, mud, gravel and iron particles including organic fibres such as Psyllium Industrial Dust) ash, acid insoluble ash, etc. Generally these impurities will have come from the various processing steps used to create the final organic binder powder, or may be a result of the growing and harvesting conditions of the organic binder. Generally, the purity of the organic binder component will be greater than about 70 %, preferably greater than about 80 %, preferably greater than about 85 %, with the remaining % being made up of one or more impurities. In some embodiments, the purity of the organic binder component may be at least 90 %, 95 %, 96 %, 97 %, 98 %, 99 % or about 100 %.

A problem with previous applications has been combining the need to supply moisture to the mortar matrix with the need to create a more or less compact matrix. In previous applications this required a stone with a higher than usual proportion of very fine particles, the fine particles acting rather like a sponge to hold moisture. This runs counter to the fundamental requirements of unbound pavement jointing technology and such a material used for jointing would be easily displaced or squeezed out when paving elements move under traffic loads. The rock types which produce such a high proportion of fine particles are often referred to as "rotten rock" and not only produce a very high fines content when crushed but have a relatively high water absorption.

Thus, in the present invention, in combination with the organic binder component of the present inventive blend, there is also the presence of crushed glass forming a particulate component, wherein less than 10% of the glass particles used are less than 50 µm. In preferred embodiments, the glass is recycled glass.

In particular embodiments, the particles of recycled glass have been processed such that the majority of the particles exhibit substantially rounded edges. Such a shape is believed to be advantageous as it allows optimal voidage for water percolation when used in combination with other materials such as aggregate or sand and provides both optimum shape and surface texture for the organic binder to function effectively.

Thus, in further preferred embodiments, the crushed glass has been produced using a high velocity impact, preferably autogenous crushing process. An autogenous crushing process is one where the glass particles are used to crush themselves. Preferably such a process occurs during the use of a so-called "Vertical Shaft Impact" (VSI) crusher, such as employed in certain Barmac crushers.

Thus, the recycled glass used may be initially processed into a glass cullet by an impact crusher, such as a hammer mill. The type of crusher used at this stage is not important. Typically, the next stage in the process is that the glass cullet is washed and dried, in order to remove the majority or substantially all organic and inorganic contaminants, such as sugar, paper, metal and plastics. The washed and dried glass cullet is then further processed to produce particles in sizes varying from 2mm down to 1 micron depending on the requirements of the end user in a high speed attrition rotary crusher with the primary objective of 'rounding' the sharp edges of the each individual particle to produce recycled glass particles that are defined as sub-angular cuboid in shape.

In some embodiments of the present invention, the crushed glass is present in the basic binder blend with the majority of the particles being greater than about 50 µm in approximate diameter. In some embodiments, the majority of the glass particle size in the binder blend is preferably less than about 1 mm in approximate diameter. Preferably, the majority or substantially all of the particle size distribution is between about 50 µm to about 1000 µm. More preferably, the majority or substantially all of the particle size distribution is between about 50 µm to about 800 µm. More preferably, the majority or substantially all of the particle size distribution is between about 80 µm to about 600 µm. Yet more preferably, the majority or substantially all of the particle size distribution is between about 200 µm to about 800 µm, or about 200 µm to about 600 µm.

Such particle size distributions are achievable using standard techniques, for example by crushing and sieving through appropriately sized sieves or meshes. Crushed glass obtained from commercial suppliers (such as Green Future Recycling Ltd, Lancashire) can be reasonably accurately graded and purchased according to need. Further laboratory testing can be conducted to confirm particle size range if required.

Glass is not just "another aggregate". All natural stone aggregates have a degree of water absorption, some more than others. Glass effectively has none yet it is hydrophilic, i.e. it attracts water but does not absorb it. In addition glass is well known for the capillary effect it has with water.

Introducing crushed glass into the aggregate blend and omitting the high proportion of very fine aggregate particles produces a particle size distribution (PSD) similar to that normally required for jointing material used in documented unbound construction methodology. It is no longer necessary to employ "rotten rock" and stronger, more suitable stone types may be used. The joint is more water permeable when using crushed glass to replace the otherwise high fines content and so the organic binder of the present invention can be supplied with moisture more quickly and at a more even rate through the depth of the joint in modular paving or the depth of a pathway surfaced using this product.

Using crushed glass as the conduit to supply moisture to the organic binder enables the use of optimal particle size distribution of crushed rock or sand, thus creating a structurally sound jointing product rather than the weaker, decorative use of materials which do not include crushed glass and which therefore employ a high proportion of fine aggregate particles.

Referring to the use of this invention for pathway surfacing rather than for jointing materials, the same use of crushed glass to replace the otherwise excessive fine particle content of the finished product is also relevant. By introducing crushed glass and omitting the very high proportion of fine aggregate particles otherwise needed, the finished pathway is more water permeable in service and the organic binder (e.g. psyllium) can be supplied with moisture more quickly and at a more even rate through the depth of the structure.

In further embodiments of the present invention, the binder blend preferably comprises the plant binder component in a range of up to about 15 % by dry weight of binder + glass and the glass component in a range of at least about 85 % by dry weight of binder + glass. More preferably, the plant binder component is present in a range of about 1 % to about 10 % by dry weight of binder + glass with the glass component being present in a range of between about 99 % and about 90 % by dry weight of binder + glass. Yet more preferably, the plant binder component is present in a range of between about 2 % and about 7.5 % by dry weight of binder + glass with the glass component being present in a range of between about 98 % and about 92.5 % by dry weight of binder + glass. Yet more preferably, the plant binder component is present in a range of between about 2.5 % and about 6 % by dry weight of binder + glass and the glass component is present in a range of between about 97.5 % and about 94% by dry weight of binder + glass. Yet more preferably, the plant binder component is present at around 5 % by dry weight of binder + glass and the glass component is present at around 95 % by dry weight of binder + glass. If glass or aggregate was not actually kiln dried, the typical moisture content might be circa 2% - 5% and this would not significantly affect the quantities.

In the above ranges, the combined totals of the plant and glass components necessarily equate to 100% of the binder component + glass component weight.

The basic blend may include a variety of other components, such as recycled plastics within the aggregates or geosynthetic aggregates and/or recycled rubber fines which may aid flexibility. In situations where a modular pavement having joints filled with this product might encounter very high volumes of surface water and/or high pressure water cleaning methods are employed, it can be advantageous to include "rubber crumb" granules, e.g. from recycled vehicle tyres, within the product recipe. By rubber crumb, it is to be understood that any rubber-like material may be suitable, such as synthetic rubber and synthetic rubber blends. The size of the rubber crumb used is typically 0 - 1 mm (e.g. 0.2, 0.3, 0.4, 0.5, etc.) although in some situations larger sizes may be usefully employed (e.g. approx. 1, 2, 3, 4, 5 mm). Rubber crumb typically may be added in proportions not more than about 10% by weight of the overall product dry mass by weight (i.e. binder blend + aggregates). More typically rubber crumb is added in the proportion 5% by weight of the overall dry product mass, although other proportions may be about 1-5 % by weight, 1-10% by weight, 2, 3, 4 % by weight.

The effect is that the exposed surface of the material is noticeably hydrophobic whilst water permeability is not reduced and the crushed glass remains effective in actively transferring water to the psyllium. Abrasion resistance of the surface during periods of very heavy wetting is enhanced by this addition of rubber crumb.

Preferably, the basic blend does not include fibre strands. In some embodiments of the present invention, and as discussed above, there may be nominal amounts of impurities present in the binder blend. Such impurities might comprise, e.g. light and/or heavy extraneous matter (as discussed above), ash, acid insoluble ash, ultra-fine crushed glass particles etc. The total amount of impurities and/or other components in the blend may equate to approximately 0.1 % - 20 % of the weight of binder + glass components, optionally about 5 % to about 15 %, optionally about 1 % to about 10 %, optionally about 0.1 to about 1 %.

In some embodiments of the present invention, the blend does not include non-plant based binders, such as artificial polymers. In alternative embodiments of the present invention, there may be one or more additional polymers (natural or artificial) present in the blend or final mixture (i.e. blend + aggregates). For example, for joint filling material in urban locations where aggressive cleaning regimes are used, abrasion resistance at the surface of the joints between paving elements filled with this material may be enhanced by the addition of a small quantity of a water permeable polymer, such as Elotex FX2322 or another similar polymer (e.g. DOW DLP 2001). The effect of adding this polymer is very different from those effects sought by applications for straightforward "polymer sand" products. Products which comprise only sand, water soluble polymer and perhaps some other soluble or insoluble minerals rely for their stiffness on the polymer, it being the sole significant binding agent. Such patents invariably specify a relatively large amount of polymer to be added.

The present invention preferably relies upon the swelling effect of the organic binder (e.g. psyllium) to provide stiffness and, to a substantial extent, the adhesive properties of psyllium to binds the matrix together.

The addition of a small amount of water soluble polymer, typically less than about 3% and more typically either about 1 % or 2% of the overall dry product mass by weight (i.e. binder blend + aggregates), provides a tensile connection between aggregate particles which the swelling psyllium can push against (e.g., in a similar way to blowing up a football or rather a lot of footballs in an enclosed net). The same amount of polymer added without any organic binder (e.g. psyllium) produces a relatively weak and soft matrix using the same proportions of aggregate and glass or aggregate alone. It is the combination of psyllium and water soluble polymer which provides enhanced stiffness and resistance to abrasion at the surface of the joints.

There is an additional synergy between a water soluble polymer and organic binder (e.g. psyllium) which is relevant to the installation phase of filling the joints in a modular pavement. In this regard, a water soluble polymer is activated by water but the "curing" of the polymer, where cross bonding takes place, requires that water is subsequently lost from the system. Other applications have employed Portland cement or hydraulic lime as desiccants to effect this dehydration of the matrix. In the present invention, the organic binder (e.g. psyllium) acts as a desiccant within the freshly mixed product. As the binder absorbs water from the freshly mixed and applied product it proceeds to swell concurrently with the polymer curing, this combined effect is beneficial to both constituents and the product as a whole.

In some embodiments of the present invention, there is added to the binder blend at least one metal hydroxide and/or at least one a metal oxide. In preferred embodiments, the metal hydroxide is calcium hydroxide (optionally in the form of hydraulic lime), or aluminium hydroxide. Preferred metal oxides include calcium oxide. Combinations of metal hydroxides and metal oxides can be used in some embodiments of the present invention.

In the blends of the present invention, the metal hydroxide and/or metal oxide may be present in an amount of between about 0.1 % and about 5 % of the overall dry product mass by weight, preferably between about 0.1 % and about 2 %.

With particular regard to metal hydroxide, and particularly calcium hydroxide, it has been found that amounts in the region of approx. 0.5 % to 2 % are particularly useful, more preferably between about 0.5 % and 1 %.

With regard to metal oxides, and particularly calcium oxide, it has been found that generally smaller amounts can be used to achieve the same effect. For example, in the range of about 0.1 % to about 1 %. In some aspects, however, higher quantities of metal oxide can be used (e.g. 0.5 % to 2 %).

In addition, the blends of the present invention may include one or more herbicides and/or fungicides.

The binder component and the crushed glass component of the inventive basic blend (with or without impurities or other components) can be mixed together in the appropriate ratios under dry conditions prior to use. In such an embodiment, the blend may be packaged as a pre-mixed composition, awaiting the addition of water and optionally other aggregates to form a finished product.

Optionally, the binder component and the crushed glass component may form a kit of parts, each part packaged separately from the other. In this case, a user would be required to mix appropriate proportions of binder and glass powder together before or during the addition of water in order to create the final blend. The kit of parts may include instructions as to the various ratios to be combined. The kit of parts much also comprise additional implements such as a measuring scoop for ease of use.

It is intended that the product is mixed with water, into a flowable slurry, prior to installation and applied without delay after mixing to fill the joints.

When the product is to be used as a homogenous surfacing material it is usual to add a relatively small amount of water and the product thoroughly mixed to a consistency generally referred to in the industry as "soil moist", that is to say that when a quantity of material is grasped in the hand and the grip released, the material forms a cohesive mass which does not crumble.

When the product is to be used as a joint filling material for modular pavements, as an alternative to being mixed and applied in the "soil moist" form, it is possible to mix extra water so as to form a wet, free-flowing slurry which is allowed to slump into the open joints.

In use, therefore, water is added to the mixture of plant binder and glass powder. The amount of water added will be readily known to the skilled person, but will typically be in the region of approx. 100 - 175 litres water per tonne of gross product depending on aggregate moisture content. Typically, the water will activate the binder component on contact, with the binder component swelling as it absorbs the water. As the blend is mixed with the water, an aggregate paste is formed between the swollen binder particles and the glass particles, which, after drying, forms a resistant structure useful for a variety of construction needs. Due to the relatively high hydraulic conductivity value, the glass readily binds with the mucilage, making a nano-composite within the overall aggregate composition which decreases the magnitude of stress when the water content is increased.

The basic blend should remain in a cohesive mass which requires a physical force to be applied in order to disrupt the matrix.

Thus, in some embodiments of the present invention, there is provided the basic inventive blend as described above (i.e. comprising, or consisting essentially of, a portion of plant binder and a remaining portion of crushed glass (preferably recycled)). Such a blend is advantageous as it exhibits favourable properties without the need for commonly additional components such as fibres, which are often added to improve the binding properties of aggregate blends.

By using crushed recycled glass together with the organic binder described, the inventors have identified that this combination can universally be added to aggregate blends having a smaller concentration of very fine particles than is otherwise possible. The use of a high proportion of very fine particles in existing blends is often disadvantageous as the resulting blend prevents water from easily draining through the blend. The products of the present invention are preferably more water permeable than existing blends, which is desirable in both ecological terms and in the mechanical functionality of the materials in service.

Preferably, there is no or little Pozzolanic effect of the compositions of the present invention.

Thus, in some embodiments of the present invention, there is substantially no occurrence of ultra- fine particles (e.g. less than 50 µm) of glass. In the invention, less than 10% of the glass particles used are less than 50 µm, preferably less than about 9%, 8%, 7%, 6%, 5%, 4%, 3%, 2% and 1%. Such particles typically make up more substantial portions of existing mixes.

In this regard, in certain embodiments of the present invention, the glass preferably has gone through a process whereby a large proportion, and preferably the majority, of the ultra-fine particles have been removed. Such a process can be one such as a heating process, a vacuum process, or a washing process.

The inventors have identified a specific and unique advantage in this system which combines the best of both the unbound system and the plastic and/or ductile bound system. In common with the plastic bound systems which employ polymeric and resin binders, the present blend is considerably more stiff than an unbound aggregate matrix but will deform under stress. The advantage this organic binder system has is twofold; (i) when dry the material becomes more friable and is capable of subsequently reforming or settling in a way similar to an unbound system; (ii) when water is present the additional swell volume provided by the organic binder serves to actively stiffen the matrix once again. This constantly rejuvenating system results in a bound aggregate matrix which is flexible and plastic or ductile in behaviour, which continually self-heals in service and therefore has an enhanced lifespan.

The inventors have tested this combination of organic binder and crushed recycled glass together with a range of different courser aggregates, producing severally a successful bound homogenous aggregate for pathway construction, a successful bound bedding aggregate and a successful bound jointing aggregate.

Thus, in alternative embodiments of the present invention, there is provided a 'finished' (aggregate) product comprising the basic inventive binder blend as described herein in combination with further components, such as other aggregates, which further components are bound together by the inventive basic blend.

As used herein, a 'finished', or aggregate, product is one that comprises the basic inventive blend in combination with larger components, typically one or more courser aggregates that come in a range of relatively larger particle sizes than those used in the binder blend, such as sizes ranging from e.g. about 1 mm to about 10 mm. Such courser aggregates can comprise sand (natural / dredged), which typically has particle sizes in the 1 mm range and downwards, grit (e.g. crushed rock fines), which typically comprise particle sizes in the 5 mm range and downwards; and even larger aggregates which may be present in particle sizes of 10 mm and downwards (such as CEDEC™). A 'finished' product as described herein does not necessarily curtail the use of the product with further components.

As used herein, aggregates present in a finished product may comprise many of the well known aggregates currently used in construction, and which come in a variety of different particulate size ranges. Such aggregates may typically comprise crushed natural stone, grit, course sand, fine sand etc. The sand may be naturally occurring or dredged.

Moreover, in some embodiments of the present invention the aggregate component used in the finished products may comprise or consist essentially of larger particles of crushed (preferably recycled) glass than the sizes of the glass particles used in the basic binder blend. In such finished products, the recycled glass content of the final product may therefore make up approximately 100 % by weight of the non-plant-based component of the total product (excluding any impurities present).

In some embodiments of the 'finished' products of the present invention, the binder blend preferably makes up to about 30 % of the total dry weight of the finished product, with the additional components (e.g. aggregates) making up the rest of the product (e.g. at least about 70 %). Preferably, the basic binder blend makes up between about 5 % and 25 % of the total dry weight. Yet more preferably, the binder blend makes up between about 10 % and about 20 % of the total dry weight of the total dry weight. In some embodiments, the binder blend makes up about 20 % of the finished product, with the additional components making about 80 % of the finished product. In some embodiments, the binder blend makes up about 10 % of the finished product, with the additional components making about 90 % of the finished product.

### Example 1 - Preparation of basic binder blend

A number of test samples were prepared.

These samples comprised between 2 % and 7.5 %, and typically 5 % (by weight of dry basic blend) of psyllium husk powder (JYOT OVERSEAS PVT LTD, Gujarat, India) with a range of swell volume from 27 ml/g to 42 ml/g (average swell volume of 35 ml/g) as guaranteed by the supplier.

The remainder of the basic blend was made up of crushed recycled glass (such as Green Future Recycling Ltd, Lancashire) with an average particle size of about 80 µm to about 600 µm.

### Example 2 - Preparation of aggregate products

To the basic blends as described in Example 1, various course aggregates were added. Depending on the intended use of the aggregate product, the examples comprised aggregates containing sand at approximately 1 mm size particles and down, grit (natural crushed stone aggregate) with an aggregate particle size of 5 mm and down, and CEDEC™ (CED Ltd, Essex, UK) with an average particle size of crushed stone at 10 mm and down.

Additionally, test samples of aggregate products were prepared where crushed recycled glass was used as the additional component. This crushed recycled glass was courser than the particles used in the preparation of the basic blend, having an average particle size of between 1 mm and 10 mm.

In the preparation of the aggregate products, the basic blend was mixed with the course aggregate in a ratio of approx 20% basic blend to approx. 80 % course aggregate for the sand and grit compositions, or approx. 10% basic blend to approx. 90 % course aggregate on the CEDEC™ composition, depending on the intended use of the finished product. Products intended for use as bedding and jointing for modular paving employ an approx 20% basic blend to 80 % course aggregate whereas products intended for use as homogenous layers employ 10% basic blend to 90 % course aggregate.

### Example 3 - Cohesiveness and friability testing

Each recipe was thoroughly blended together with excess water, such that a mix typically having a 50% slump was produced.

These blends were packed and levelled into a heat resistant open topped container, to a depth of between 40 and 70 mm.

Each container, with sample, was placed in a heated oven and dried at a temperature of circa 95 °C for sufficient time for the water to evaporate. The time allowed for this was approximately 5 hours.

The desiccated sample was removed from the container and examined for cohesiveness and physical strength and stiffness.

The surface of the sample was abraded in order to assess the friability and short term wear resistance of the sample, this is achieved by approximately simulating footfall (a gloved finger is adequate for a laboratory test).

### Example 4 - Environmental testing

The samples were placed back into their containers and water was added to fully cover the sample, such that became fully saturated. The time allowed for this was approximately 5 hours.

The surface of the samples were then abraded in order to assess the friability and short term wear resistance of the sample, this is achieved by approximately simulating footfall (a gloved finger is adequate for a laboratory test).

The repeated desiccation and soaking phases of this test cycle replicate the extremes of climate during the service life of a pavement constructed using this product.

### Example 5 - Results I - comparison of basic blends

Comparison of the basic blend comprising 5 % plant binder component and 95 % crushed glass with standard mortars exhibited advantageous results over blends where no crushed glass powder was present.

### Example 6 - Results II -comparison of aggregate products

Comparisons of aggregate blends which feature only natural stone aggregate or sand, against the same materials in combination with the inventive basic blend of the present invention in comprising crushed recycled glass prove that the samples containing crushed recycled glass are significantly superior to those comprising only natural stone aggregate with no crushed glass.

It appears that the crushed glass replaces what would otherwise need to be much finer particles of aggregate. Existing aggregates require a very high proportion of fine particles results in a more or less impermeable mass which is less quick to respond to changes in ambient moisture. By employing crushed recycled glass the present invention allows a wide range of aggregate to complete the finished products and these products are more water permeable in addition to being more resilient in service.

## Claims

1. A binder blend comprising an organic binder component and a glass component, wherein the binder component is derived from the plant genus Plantago, preferably psyllium, and wherein said glass component comprises crushed glass particles, wherein less than 10% of the glass particles used are less than 50 µm.

2. The binder blend of claim 1, wherein said organic binder has a swell volume of between 10 ml/g and 100 ml/g, preferably wherein the binder component has a swell volume in the range of between 15 ml/g and 80 ml/g, preferably wherein the binder component has a swell volume in the range of between 20 ml/g and 70, 60 or 50 ml/g, preferably wherein the binder component has a swell volume in the range of between 30 ml/g to 50 ml/g, preferably wherein the binder component has a swell volume in the range of 20 ml/g to 30 ml/g, preferably 25 ml/g to 45 ml/g, preferably between 27 ml/g and 42 ml/g.

3. The binder blend of any preceding claim, wherein said organic binder component and/or said glass component further comprises a relatively small amount of impurities.

4. The binder blend of any preceding claim, wherein one or other, and preferably both, of said organic binder component and glass component is provided as a particulate matter.

5. The binder blend of any of the preceding claims, wherein said crushed glass comprises particles of glass having substantially rounded edges.

6. The binder blend of any preceding claim, wherein the glass component comprises particles wherein a substantial portion of the particles are greater than 50 µm in approximate diameter, preferably less than 1 mm in approximate diameter, preferably wherein the majority or substantially all of the particle size distribution is between 50 µm to 1000 µm, preferably wherein the particle size distribution is between 50 µm to 800 µm, preferably wherein the majority or substantially all of the particle size distribution is between 80 µm to 600 µm, preferably wherein the majority or substantially all of the particle size distribution is between 200 µm to 800 µm, or 200 µm to 600 µm.

7. The blend of any preceding claim, wherein the binder blend preferably comprises the plant binder component in a range of up to 15 % by dry weight and the glass component in a range of at least 85 % by dry weight, preferably the plant binder component is present in a range of 1 % to 10 % by dry weight with the glass component being present in a range of between 99 % and 90 % by dry weight, preferably the plant binder component is present in a range of between 2 % and 7.5 % by dry weight with the glass component being present in a range of between 98 % and 92.5 % by dry weight, preferably the plant binder component is present in a range of between 2.5 % and 6 % by dry weight and the glass component is present in a range of between 97.5 % and 94% by dry weight, preferably the plant binder component is present at around 5 % by dry weight and the glass component is present at around 95 % by dry weight.

8. A binder blend as claimed in any preceding claim in combination with one or more aggregates.

9. The blend of any preceding claim, further comprising a polymer, preferably wherein the polymer is water soluble, and/or optionally wherein the polymer is present at less than 5 % by dry weight, preferably less than 3 %, preferably between 1 - 2 %.

10. The binder blend of claims 8-9, where said blend comprises granules of rubber-like material, such as synthetic rubber, preferably wherein the rubber granules comprise not more than 10 % by weight of the overall blend dry mass.

11. The binder blend of any preceding claim, further comprising a metal hydroxide and/or a metal oxide, preferably wherein the metal hydroxide is calcium hydroxide and/or aluminium hydroxide, preferably calcium hydroxide, preferably wherein the metal hydroxide and/or metal oxide is present at an amount of 0.1 % to 5 % by dry weight, preferably 0.1 % to 2 %.

12. The binder blend of claims 8 to 11, wherein said aggregates comprise particles of material of larger size than the particles of the organic binder component and/or glass component, preferably wherein the size of said aggregates range from 1 mm to 10mm, optionally wherein said aggregates can comprise rock, grit, sand, and/or glass.

13. The binder blend of claims 8 to 12, wherein the binder blend preferably makes up to 30 % of the total dry weight of the finished product, with the additional components (e.g. aggregates) making up the rest of the product (e.g. at least 70 %), preferably wherein the basic binder blend makes up between 5 % and 25 % of the total dry weight, preferably the binder blend makes up between 10 % and 20 % of the total dry weight, preferably wherein the binder blend makes up 20 % of the finished product with the additional components making 80 % of the finished product, preferably wherein the binder blend makes up 10 % of the finished product with the additional components making 90 % of the finished product.

14. Use of a binder blend of any of the preceding claims in the manufacture of a paving system or a surfacing material.

15. Use of a binder blend of any of the preceding claims in combination with water in the manufacture of an aggregate paste.

## Patentansprüche

1. Eine Bindemittelmischung, die eine organische Bindemittelkomponente und eine Glaskomponente beinhaltet, wobei die Bindemittelkomponente aus der Pflanzengattung Plantago, vorzugsweise Psyllium, abgeleitet ist, und wobei die Glaskomponente zerkleinerte Glaspartikel beinhaltet, wobei weniger als 10 % der verwendeten Glaspartikel kleiner als 50 µm sind.

2. Bindemittelmischung gemäß Anspruch 1, wobei das organische Bindemittel ein Quellvolumen von zwischen 10 ml/g und 100 ml/g aufweist, wobei die Bindemittelkomponente vorzugsweise ein Quellvolumen in dem Bereich von zwischen 15 ml/g und 80 ml/g aufweist, wobei die Bindemittelkomponente vorzugsweise ein Quellvolumen in dem Bereich von zwischen 20 ml/g und 70, 60 oder 50 ml/g aufweist, wobei die Bindemittelkomponente vorzugsweise ein Quellvolumen in dem Bereich von zwischen 30 ml/g bis 50 ml/g aufweist, wobei die Bindemittelkomponente vorzugsweise ein Quellvolumen in dem Bereich von 20 ml/g bis 30 ml/g, vorzugsweise 25 ml/g bis 45 ml/g, vorzugsweise zwischen 27 ml/g und 42 ml/g aufweist.

3. Bindemittelmischung gemäß einem der vorhergehenden Ansprüche, wobei die organische Bindemittelkomponente und/oder die Glaskomponente ferner eine relativ kleine Menge an Unreinheiten beinhaltet.

4. Bindemittelmischung gemäß einem der vorhergehenden Ansprüche, wobei die eine oder die andere und vorzugsweise beide von der organischen Bindemittelkomponente und der Glaskomponente als ein Feststoff bereitgestellt sind.

5. Bindemittelmischung gemäß einem der vorhergehenden Ansprüche, wobei das zerkleinerte Glas Partikel aus Glas mit im Wesentlichen abgerundeten Kanten beinhaltet.

6. Bindemittelmischung gemäß einem der vorhergehenden Ansprüche, wobei die Glaskomponente Partikel beinhaltet, wobei ein wesentlicher Anteil der Partikel im ungefähren Durchmesser größer als 50 µm, vorzugsweise im ungefähren Durchmesser kleiner als 1 mm ist, wobei vorzugsweise der Großteil der oder im Wesentlichen die gesamte Partikelgrößenverteilung zwischen 50 µm bis 1000 µm ist, wobei vorzugsweise die Partikelgrößenverteilung zwischen 50 µm bis 800 µm ist, wobei vorzugsweise der Großteil der oder im Wesentlichen die gesamte Partikelgrößenverteilung zwischen 80 µm bis 600 µm ist, wobei vorzugsweise der Großteil der oder im Wesentlichen die gesamte Partikelgrößenverteilung zwischen 200 µm bis 800 µm oder 200 µm bis 600 µm ist.

7. Mischung gemäß einem der vorhergehenden Ansprüche, wobei die Bindemittelmischung vorzugsweise die Pflanzenbindemittelkomponente in einem Bereich von bis zu 15 Trockengew.-% und die Glaskomponente in einem Bereich von mindestens 85 Trockengew.-% beinhaltet, vorzugsweise die Pflanzenbindemittelkomponente in einem Bereich von 1 Trockengew.-% bis 10 Trockengew.-% vorhanden ist, wobei die Glaskomponente in einem Bereich von zwischen 99 Trockengew.-% und 90 Trockengew.-% vorhanden ist, vorzugsweise die Pflanzenbindemittelkomponente in einem Bereich von zwischen 2 Trockengew.-% und 7,5 Trockengew.-% vorhanden ist, vorzugsweise die Glaskomponente in einem Bereich von zwischen 98 Trockengew.-% und 92,5 Trockengew.-% vorhanden ist, wobei die Pflanzenbindemittelkomponente vorzugsweise in einem Bereich von zwischen 2,5 Trockengew.-% und 6 Trockengew.-% vorhanden ist und die Glaskomponente in einem Bereich von zwischen 97,5 Trockengew.-% und 94 Trockengew.-% vorhanden ist, die Pflanzenbindemittelkomponente vorzugsweise bei etwa 5 Trockengew.-% vorhanden ist und die Glaskomponente bei etwa 95 Trockengew.-% vorhanden ist.

8. Bindemittelmischung gemäß einem der vorhergehenden Ansprüche in Kombination mit einem oder mehreren Zuschlagstoffen.

9. Bindemittel gemäß einem der vorhergehenden Ansprüche, das ferner ein Polymer beinhaltet, wobei das Polymer vorzugsweise wasserlöslich ist und/oder wobei das Polymer optional bei weniger als 5 Trockengew.-%, vorzugsweise weniger als 3 Trockengew.-%, vorzugsweise zwischen 1-2 Trockengew.-% vorhanden ist.

10. Bindemittelmischung gemäß den Ansprüchen 8-9, wobei die Mischung Körnchen aus kautschukartigem Material, wie etwa synthetischem Kautschuk, beinhaltet, wobei die Kautschukkörnchen vorzugsweise nicht mehr als 10 Gew.-% der Trockenmasse der Gesamtmischung beinhalten.

11. Bindemittelmischung gemäß einem der vorhergehenden Ansprüche, die ferner ein Metallhydroxid und/oder ein Metalloxid beinhaltet, wobei das Metallhydroxid vorzugsweise Calciumhydroxid und/oder Aluminiumhydroxid ist, vorzugsweise Calciumhydroxid, wobei das Metallhydroxid und/oder das Metalloxid vorzugsweise in einer Menge von 0,1 Trockengew.-% bis 5 Trockengew.-%, vorzugsweise 0,1 % bis 2 %, vorhanden ist.

12. Bindemittelmischung gemäß den Ansprüchen 8 bis 11, wobei die Zuschlagstoffe Partikel aus Material von größerer Größe als die Partikel der organischen Bindemittelkomponente und/oder Glaskomponente beinhalten, wobei vorzugsweise die Größe der Zuschlagstoffe von 1 mm bis 10 mm reicht, wobei die Zuschlagstoffe optional Gestein, Kies, Sand und/oder Glas beinhalten können.

13. Bindemittelmischung gemäß den Ansprüchen 8 bis 12, wobei die Bindemittelmischung vorzugsweise bis zu 30 % des Gesamttrockengewichts des fertigen Produkts ausmacht, wobei die zusätzlichen Komponenten (z. B. Zuschlagstoffe) den Rest des Produkts (z. B. mindestens 70 %) ausmachen, wobei die grundlegende Bindemittelmischung vorzugsweise zwischen 5 % und 25 % des Gesamttrockengewichts ausmacht, wobei vorzugsweise die Bindemittelmischung zwischen 10 % und 20 % des Gesamttrockengewichts ausmacht, wobei vorzugsweise die Bindemittelmischung 20 % des fertigen Produkts ausmacht, wobei die zusätzlichen Komponenten 80 % des fertigen Produkts ausmachen, wobei vorzugsweise die Bindemittelmischung 10 % des fertigen Produkts ausmacht, wobei die zusätzlichen Komponenten 90 % des fertigen Produkts ausmachen.

14. Verwendung einer Bindemittelmischung gemäß einem der vorhergehenden Ansprüche bei der Herstellung eines Pflasterungssystems oder eines Beschichtungsmaterials.

15. Verwendung einer Bindemittelmischung gemäß einem der vorhergehenden Ansprüche in Kombination mit Wasser bei der Herstellung einer Zuschlagstoffmasse.

## Revendications

1. Un mélange homogène de liant comprenant un composant liant organique et un composant verre, dans lequel le composant liant est dérivé de la plante du genre Plantago, préférablement le psyllium, et dans lequel ledit composant verre comprend des particules de verre pilé, moins de 10 % des particules de verre utilisées faisant moins de 50 µm.

2. Le mélange homogène de liant de la revendication 1, dans lequel ledit liant organique a un volume de gonflement compris entre 10 ml/g et 100 ml/g, préférablement dans lequel le composant liant a un volume de gonflement dans la gamme comprise entre 15 ml/g et 80 ml/g, préférablement dans lequel le composant liant a un volume de gonflement dans la gamme comprise entre 20 ml/g et 70, 60 ou 50 ml/g, préférablement dans lequel le composant liant a un volume de gonflement dans la gamme comprise entre 30 ml/g et 50 ml/g, préférablement dans lequel le composant liant a un volume de gonflement dans la gamme allant de 20 ml/g à 30 ml/g, préférablement de 25 ml/g à 45 ml/g, préférablement comprise entre 27 ml/g et 42 ml/g.

3. Le mélange homogène de liant de n'importe quelle revendication précédente, dans lequel ledit composant liant organique et/ou ledit composant verre comprend en sus une quantité relativement petite d'impuretés.

4. Le mélange homogène de liant de n'importe quelle revendication précédente, dans lequel l'un ou l'autre, et préférablement l'un et l'autre, desdits composant liant organique et composant verre est fourni sous forme de matière particulaire.

5. Le mélange homogène de liant de n'importe lesquelles des revendications précédentes, dans lequel ledit verre pilé comprend des particules de verre ayant des bords substantiellement arrondis.

6. Le mélange homogène de liant de n'importe quelle revendication précédente, dans lequel le composant verre comprend des particules, une portion substantielle des particules faisant plus de 50 µm de diamètre approximatif, préférablement moins de 1 mm de diamètre approximatif, préférablement dans lequel la majeure partie ou substantiellement l'ensemble de la distribution de tailles de particules est comprise entre 50 µm et 1 000 µm, préférablement dans lequel la distribution de tailles de particules est comprise entre 50 µm et 800 µm, préférablement dans lequel la majeure partie ou substantiellement l'ensemble de la distribution de tailles de particules est comprise entre 80 µm et 600 µm, préférablement dans lequel la majeure partie ou substantiellement l'ensemble de la distribution de tailles de particules est comprise entre 200 µm et 800 µm, ou 200 µm et 600 µm.

7. Le mélange homogène de n'importe quelle revendication précédente, où le mélange homogène de liant comprend préférablement le composant liant à base de plante dans une gamme allant jusqu'à 15 % en poids sec et le composant verre dans une gamme d'au moins 85 % en poids sec, préférablement le composant liant à base de plante est présent dans une gamme allant de 1 % à 10 % en poids sec avec le composant verre présent lui dans une gamme comprise entre 99 % et 90 % en poids sec, préférablement le composant liant à base de plante est présent dans une gamme comprise entre 2 % et 7,5 % en poids sec avec le composant verre présent lui dans une gamme comprise entre 98 % et 92,5 % en poids sec, préférablement le composant liant à base de plante est présent dans une gamme comprise entre 2,5 % et 6 % en poids sec et le composant verre est présent lui dans une gamme comprise entre 97,5 % et 94 % en poids sec, préférablement le composant liant à base de plante est présent à hauteur de 5 % en poids sec environ et le composant verre est présent lui à hauteur de 95 % en poids sec environ.

8. Un mélange homogène de liant tel que revendiqué dans n'importe quelle revendication précédente en combinaison avec un ou plusieurs agrégats.

9. Le mélange homogène de n'importe quelle revendication précédente, comprenant en sus un polymère, préférablement dans lequel le polymère est hydrosoluble, et/ou facultativement dans lequel le polymère est présent à hauteur de moins de 5 % en poids sec, préférablement moins de 3 %, préférablement entre 1 et 2 %.

10. Le mélange homogène de liant des revendications 8 à 9, où ledit mélange homogène comprend des granules de matière caoutchouteuse, telle que de caoutchouc synthétique, préférablement dans lequel les granules de caoutchouc ne composent pas plus de 10 % en poids de la masse sèche de mélange homogène globale.

11. Le mélange homogène de liant de n'importe quelle revendication précédente, comprenant en sus un hydroxyde métallique et/ou un oxyde métallique, préférablement dans lequel l'hydroxyde métallique est l'hydroxyde de calcium et/ou l'hydroxyde d'aluminium, préférablement l'hydroxyde de calcium, préférablement dans lequel l'hydroxyde métallique et/ou l'oxyde métallique est présent dans une quantité allant de 0,1 % à 5 % en poids sec, préférablement de 0,1 % à 2 %.

12. Le mélange homogène de liant des revendications 8 à 11, dans lequel lesdits agrégats comprennent des particules de matière de plus grande taille que les particules du composant liant organique et/ou composant verre, préférablement dans lequel la taille desdits agrégats sont comprises dans la gamme allant de 1 mm à 10 mm, facultativement dans lequel lesdits agrégats peuvent comprendre de la roche, du gravier, du sable, et/ou du verre.

13. Le mélange homogène de liant des revendications 8 à 12, dans lequel le mélange homogène de liant constitue préférablement jusqu'à 30 % du poids sec total du produit fini, les composants supplémentaires (par ex. les agrégats) constituant eux le reste du produit (par ex. au moins 70 %), préférablement dans lequel le mélange homogène de liant basique constitue entre 5 % et 25 % du poids sec total, préférablement le mélange homogène de liant constitue entre 10 % et 20 % du poids sec total, préférablement dans lequel le mélange homogène de liant constitue 20 % du produit fini, les composants supplémentaires faisant eux 80 % du produit fini, préférablement dans lequel le mélange homogène de liant constitue 10 % du produit fini, les composants supplémentaires faisant eux 90 % du produit fini.

14. Utilisation d'un mélange homogène de liant de n'importe lesquelles des revendications précédentes dans la fabrication d'un système de pavage ou d'une matière de surfaçage.

15. Utilisation d'un mélange homogène de liant de n'importe lesquelles des revendications précédentes en combinaison avec de l'eau dans la fabrication d'une pâte d'agrégats.
